# EUROPEAN PATENT SPECIFICATION

(11) **EP 0 494 935 B1**
(45) Date of publication and mention of the grant of the patent: **01.03.1995**
(21) Application number: 90915152.4
(22) Date of filing: 03.10.1990
(51) Int. Cl.: A22C 17/00, B26D 5/00

(54) **ROBOTIC CUTTING**
SCHNEIDROBOTER
METHODE DE TRANCHAGE ROBOTISE

(30) Priority: 03.10.1989 GB 8922259
(43) Date of publication of application: 22.07.1992
(73) Proprietor: UNIVERSITY OF BRISTOL, Clifton Bristol BS8 1TH (GB)
(72) Inventor: KHODABANDEHLOO, Koorosh, Devon EX15 3LA (GB); MADDOCK, Neil Andrew, Bristol, BS5 OJS (GB)
(74) Representative: Cheyne, John Robert Alexander Mackenzie
(86) International application number: GB9001511
(87) International publication number: WO9104670

(56) References cited:
- WO-A-85/00445
- FR-A- 2 394 981
- US-A- 4 209 878
- US-A- 4 624 169
- US-A- 4 738 004

## Description

This invention relates to a method and apparatus for robotic cutting, and is particularly applicable to cutting which is used to separate structurally relatively weak material from structurally relatively strong material. A preferred embodiment in accordance with the invention relates specifically to a method and apparatus for robotic cutting of meat and fat away from bone.

An experienced butcher, working manually, is able to follow a bone profile accurately with his knife, in order to remove a very large proportion of the available meat and fat from the bone.

The present invention seeks to provide a method and an apparatus for emulating the skilled human butcher while operating more quickly, and without requiring the human butcher's years of training.

WO85/00445, which discloses the preambles of claims 1 and 7, discloses a contact sensing device for sensing contact between a shearing cutter and the skin of a sheep in an automatic shearing operation. The cutter, or an attached acoustic generator, produces an audio frequency signal which is transmitted through the body of the sheep and which is detected by vibration receiving plates supported to contact the body of the sheep. It is suggested that such a contact sensing device may be used in an automatic butchery operation.

According to the first aspect of the present invention there is provided a method of separating a structurally relatively weak material from a relatively strong material using a cutter controlled by a robot, the method comprising:
a) positioning the cutter within the relatively weak material close to the relatively strong material;
b) applying a force on the cutter in the direction towards the relatively strong material;
c) displacing the cutter substantially parallel to the interface between the relatively strong and weak materials to separate the materials;
d) monitoring the reaction force applied to the cutter in a direction perpendicular to the travel direction; and
e) adjusting the travel direction of the cutter in order to maintain the reaction force substantially constant.

In a preferred embodiment, where the cutter is a blade, the orientation of the blade is adjusted in order to align the blade with the travel direction.

The magnitude of the adjustment of the travel direction is preferably determined as a function of the reaction force and the force applied to the cutter in the travel direction.

In one preferred embodiment, the reaction force is monitored and is compared with threshold values, and the travel direction of the cutter is adjusted such that the reaction force remains between the threshold values.

In a preferred process in accordance with the present invention, step a) is accomplished by:
(i) defining a presumed cut start point on or adjacent a presumed position of an interface between the weak and strong materials;
(ii) moving the cutter through the weak material along a first cut line passing through the cut start point;
(iii) monitoring a force exerted on the cutter opposing travel of the cutter through the weak material;
(iv) terminating travel along the first cut line when the opposing force exceeds a reference level.

The direction of the subsequent initial displacement of the cutter in step c) may be determined by repeatedly retracting the blade for a predetermined distance and advancing it over a slightly longer distance in a direction inclined to the previous direction of advance until, at the end of an advance, the opposing force is below the reference level.

According to a second aspect of the present invention, there is provided an apparatus for carrying out the method according to the first aspect of the invention, the apparatus comprising a cutter, provided with a force transducer, for measuring a force exerted on the cutter, and a control unit, for receiving signals from the force transducer and controlling the movement of the cutter.

For a better understanding of the present invention, and to show how it may be brought into effect, reference will now be made, by way of example, to the accompanying drawings, in which:-
Figure 1 is a schematic diagram of apparatus in accordance with the second aspect of the invention;
Figure 2 shows a cutter which forms part of the apparatus shown in Figure 1;
Figure 3 illustrates the cutter of Figure 2 in a position in which it is about to start cutting;
Figure 4 illustrates the cutting path obtained by following the method according to the first aspect of the invention;
Figures 5 and 6 illustrate different steps in the method in accordance with the first aspect of the invention; and
Figures 7 and 8 are flow charts illustrating different methods in accordance with the first aspect of the invention.

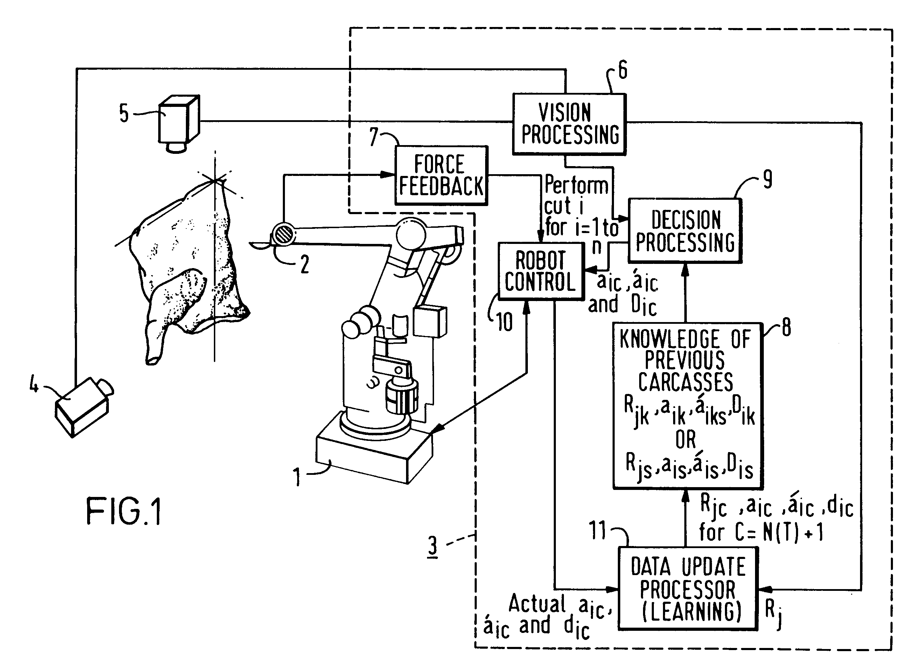

Figure 1 shows a robot 1 provided with a cutter 2 and associated with a processing unit 3. CCD cameras 4, 5 provide visual inputs to a vision processing unit 6 within the processor. A force transducer located on the cutter 2 provides inputs to a force feedback unit 7 within the processor. The apparatus as illustrated in Figure 1 is particularly intended for cutting meat away from bones, and the processor 3 contains a memory 8 in which is stored information about previous carcasses. Signals from the vision processing unit 6 and memory 8 are supplied to a decision processing unit 9. Outputs from the force feedback unit 7 and decision processing unit 9 are supplied to a robot control unit 10, which is in communication with the robot. In addition, signals from the vision processing unit 6 and robot control unit 10 are supplied to a data update unit 11, which is connected to the memory 8.

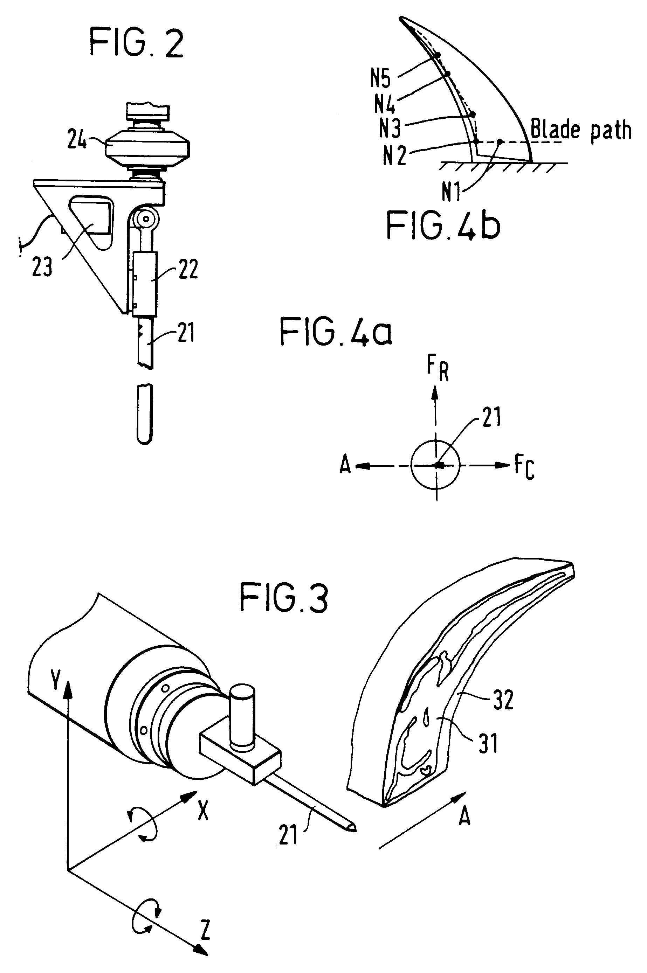

As shown in Figure 2, the cutter 2 comprises a knife blade 21 to which is connected a reciprocating mechanism 22 powered by a motor 23. Forces exerted on the knife blade are measured and converted into electrical signals by a force transducer 24.

Figure 3 shows the blade 21 in position to cut into meat in order to remove the meat and fat 31 from the bone 32. The possible directions of motion of the blade 21 are defined with reference to axes X, Y, Z, and the direction of travel of the blade is indicated by the arrow A. The blade is rotatable about the Z-axis. This rotation may be achieved positively, by an appropriate motor. Alternatively, the blade may be supported, for example by a castor mechanism, so that its width is always aligned with the blade travel direction A during cutting. Adjustment of the blade about the Z-axis is then achieved by altering its travel direction.

Figure 4a shows the blade 21 moving in the direction of the arrow A. The force exerted on the blade in the direction opposite to arrow A is designated by F_{C}, and the reaction force exerted perpendicular thereto is designated by F_{R}. Figure 4b is representative of a cutting path followed by the blade when using the method which is to be described in more detail below.

When a carcass is introduced for processing by the system, it is positioned in the field of view of the cameras 4, 5. Although two cameras are illustrated, it may be advantageous to use three or more cameras. The cameras are used to determine the spatial coordinates of a number of positions on the carcass , for example the positions of particular bones. These coordinates are determined by the vision processing unit 6. The memory 8 contains data determined from carcasses which have previously been processed by the system. The stored data include the coordinate positions of the particular positions on those carcasses, and of the cutting paths which were followed by the blade to remove meat from those carcasses. Thus, when each new set of data is determined by the vision processing unit 6, it is compared with each previously stored set of data in the memory 8. If the new data correspond closely to the data relating to an earlier carcass, this relationship is used to determine a starting point for the cutting path for the new carcass. However, if there is no suitable relationship, the starting point for the cutting path is determined simply from the relative positions of the various points on the new carcass.

When the starting point for the cutting operation (illustrated by N2 in Figure 4b) has been determined, the blade is moved along a straight path towards that point. At intervals along that straight path, for example at position N1 in Figure 4b, a testing operation is carried out in order to determine whether the blade has reached a position at which cutting along the bone should actually start. The cutting force F_{C} is measured, and is compared with a preset threshold level. When the blade encounters the bone, the cutting force rises above this threshold level. Thus, at position N1 in Figure 4b, no such increased cutting force would occur, while at position N2 it would be expected that the cutting force would be considerably above the preset threshold level. The cutting force exerted on a blade which is attempting to cut through bone can be ten times higher than when cutting through meat or fat.

When it is determined that the bone has been encountered, the knife blade is backed off by a certain distance x, and is then rotated by a fixed angle. The blade is then driven in the new direction a slightly larger distance x+dx. The cutting force is then measured again. If that cutting force still exceeds the preset value, it is determined that the knife is still being driven into the bone, and the process of backing off the knife and rotating it is repeated until the cutting force at the end of each step is found to be below the preset threshold level. This occurs when the blade is approximately parallel to the bone surface. The blade is then moved in a direction perpendicular to its cutting direction, until the measured reaction force F_{R} reaches a preset level. When this occurs, the blade is determined to be approximately parallel to and in contact with, or close to, the bone surface. Cutting then proceeds.

The blade is moved in its cutting direction, that is the direction A as shown in Figure 4a, and the processing unit 3 operates in order to maintain the reaction F_{R} force approximately constant. It will be appreciated that this reaction force F_{R} will increase as the blade approaches, or is driven into, the bone, and will decrease as the blade moves away from the bone, owing to the pressure of meat and fat between the blade and the bone.

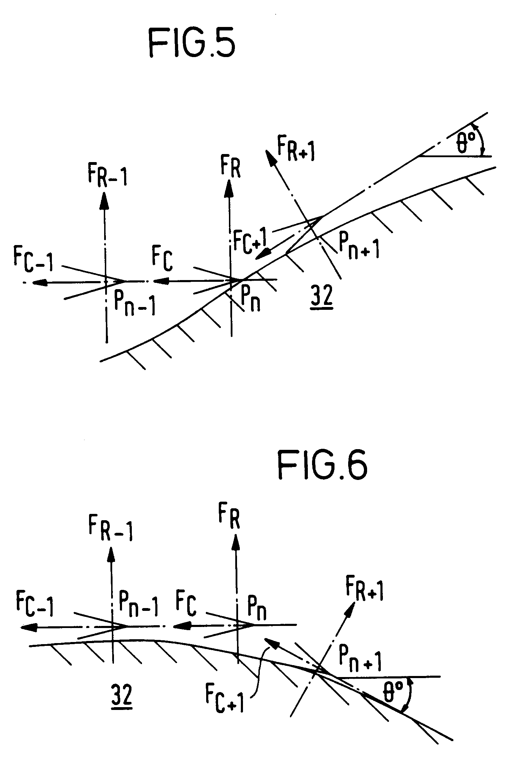

The blade is shown first in Figure 5 at position Pₙ₋₁. At this point, the reaction force acting on the blade is F_{R-1} and the cutting force is F_{C-1}. The next position of the blade is shown By Pₙ, at which point the reaction force is F_{R} and the cutting force is F_{C}. At this position, as illustrated, both the reaction force F_{R} and the cutting force F_{C} have increased significantly, indicating that the blade is close to, or attempting to cut into, the bone. In response to the increase in reaction force F_{R}, the blade is rotated by an angle ϑ . Since the reaction force is increasing, that is F_{R} is greater than F_{R-1}, the angle ϑ is positive and the blade is rotated anti-clockwise. The magnitude of the angle ϑ is determined as a function of F_{R} and F_{C} in order to keep the reaction force approximately constant. This is shown happening at position N4 in Figure 4b.

In Figure 6 the reverse process occurs. The measured reaction force F_{R} at position Pₙ is found to have decreased below a threshold level and so the blade is rotated. In this situation, the reaction force F_{R} at position Pₙ is less than the reaction force F_{R-1} at position Pₙ₋₁, because the blade has moved away from the bone 32, and so the angle of rotation ϑ is negative, that is the blade is rotated in a clockwise direction. Here, the angle ϑ is again determined as a function of F_{R} and F_{C} in order to maintain F_{R} approximately constant, and the blade is then moved to the new position Pₙ₊₁. This process is shown happening in positions N3 and N5 in Figure 4b.

Of course, the accuracy of the cutting operation can be improved if measurements are made at closely spaced intervals, and it should be recognised that the widely spaced intervals shown in Figure 4b are for the purposes of illustration only.

During the de-boning operation, various parameters are compared with those in the memory 8 in order to assess whether or not the process is proceeding as expected. For example, the actual point at which the bone is encountered when beginning cutting (position N2, Figure 4b) and the actual travel path of the blade at different stages compared with the corresponding data in the memory 8. If major discrepancies arise, separate routines may be executed in order to rectify errors, or an error alarm may be given.

When the cutting is completed, details of the cutting path are supplied to the memory 8 to form part of the database for use in future cutting operations.

Although the invention has been described above with reference to a system in which the blade can be moved in the X and Y directions and can be rotated about the Z-axis it will be appreciated that greater cutting accuracy can be obtained by providing a system in which the blade has six degrees of freedom, that is it is able to move in the X, Y and Z directions and is able to rotate about all three axes.

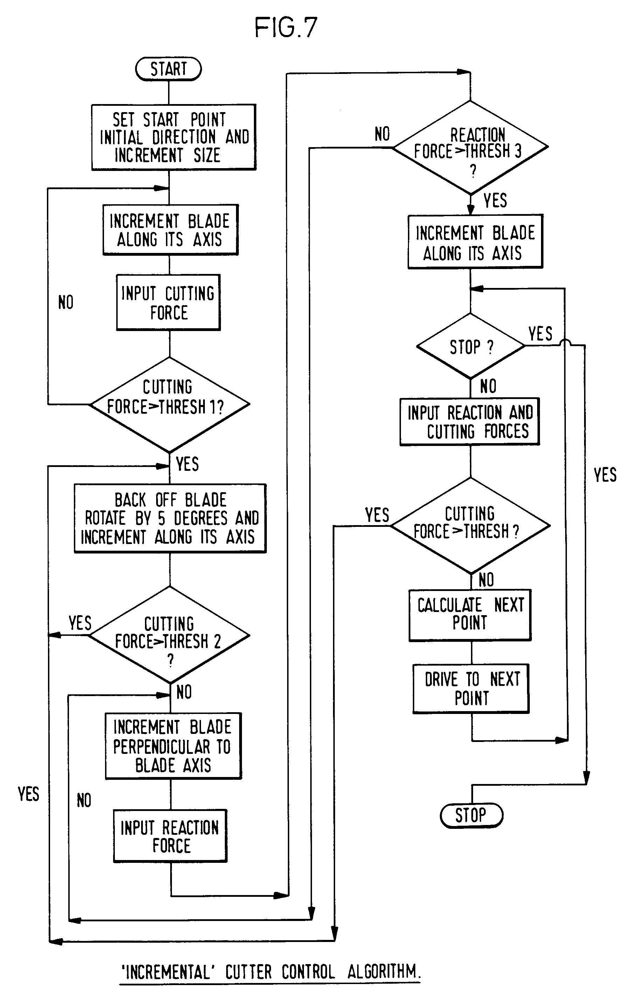

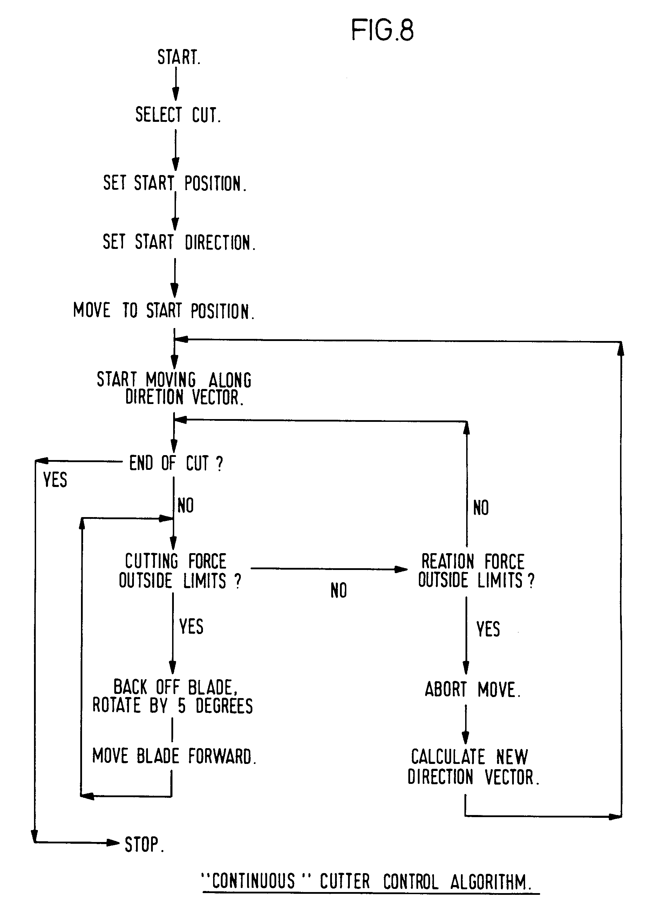

Figures 7 and 8 illustrate, respectively, an incremental cutter control algorithm and a continuous cutter control algorithm in accordance with the first aspect of the invention. The incremental cutter control algorithm shown in Figure 7 includes the steps required in order to set the cutter to the required starting position and travel direction, but the algorithm shown in Figure 8 simply summarises these as "Set Start Direction" and "Move to Start Position". In the algorithm shown in Figure 8, the cutter is moved continuously, rather than in a stepwise fashion, and the cutting and reaction forces are also monitored continuously. Only when the end point is reached, or one of the cutting and reaction forces goes outside its predetermined limits, does cutting stop.

Although the invention has been described above with reference to its application to the cutting of meat, and specifically to the separation of meat from bone, many other uses are possible within the scope of the claims. As well as separating two different materials, the system can be used to separate bodies which are made of the same material. For example, when moulding plastics materials, the finished products often include unwanted projections resulting from material which has overflowed from the mould. The method and apparatus can be used to separate this excess material from the moulded part.

## Claims

1. A method of separating a structurally relatively weak material (31) from a structurally relatively strong material (32) using a cutter (2), characterised in that the cutter is controlled by a robot (1), the method comprising:
a) positioning the cutter (2) within the relatively weak material (31) close to the relatively strong material (32);
b) applying a force on the cutter (2) in the direction towards the relatively strong material (32);
c) displacing the cutter (2) substantially parallel to the interface between the relatively strong and weak materials (32, 31) to separate the materials;
d) monitoring the reaction force (FR) applied to the cutter (2) in a direction perpendicular to the travel direction (A); and
e) adjusting the travel direction (A) of the cutter (2) in order to maintain the reaction force (FR) substantially constant.

2. A method as claimed in claim 1, wherein the cutter (2) is a blade (21), and wherein the orientation of the blade (21) is adjusted in order to align the blade (21) with the travel direction (A).

3. A method as claimed in claim 1 or 2, wherein the reaction force (FR) is monitored and is compared with threshold values, and the travel direction (A) of the cutter (2) is adjusted such that the reaction force (FR) remains between the threshold values.

4. A method as claimed in claim 3, wherein the magnitude of the adjustment of the travel direction (A) is determined as a function of the reaction force (FR) and the force (FC) applied to the cutter in the travel direction (A).

5. A method as claimed in any preceding claim, wherein step a) is accomplished by:
(i) defining a presumed cut start point on or adjacent a presumed position of an interface between the weak and strong materials (32, 31);
(ii) moving the cutter (12) through the weak material (31) along a first cut line passing through the cut start point;
(iii) monitoring a force (FC) exerted on the cutter opposing travel of the cutter through the weak material (31);
(iv) terminating travel along the first cut line when the opposing force (FC) exceeds a reference level.

6. A method as claimed in claim 5, wherein the direction of the subsequent initial displacement of the cutter (2) in step c) is determined by repeatedly retracting the blade for a predetermined distance and advancing it over a slightly longer distance in a direction inclined to the previous direction of advance until, at the end of an advance, the opposing force (FC) is below the reference level.

7. An apparatus for separating a structurally relatively weak material (31) from a structurally relatively strong material (32), the apparatus comprising a cutter (2), characterised in that the cutter is provided with a force transducer (24), for measuring a force exerted on the cutter (2), and that the apparatus further comprises a control unit (10), for receiving signals from the force transducer (24) and controlling the movement of the cutter (2) such that the apparatus operates in accordance with a method as claimed in any preceding claim.

8. An apparatus as claimed in claim 7, wherein the control unit (10) includes an electronic memory (8), containing stored data relating to previously cut workpieces, the cutter (2) being controlled on the basis of the stored data.

## Patentansprüche

1. Verfahren zum Trennen eines strukturell relativ weichen Materials (31) von einem strukturell relativ festen Material (32) unter Verwendung einer Schneideeinrichtung (2) **dadurch gekennzeichnet, daß** die Schneideeinrichtung von einem Roboter (5) gesteuert wird, wobei das Verfahren folgendes umfaßt:
a) Positionierung der Schneideeinrichtung (2) im relativ weichen Material (31) nahe dem relativ festen Material (32);
b) Ansetzen einer Kraft auf die Schneideeinrichtung (2) in Richtung des relativ festen Materials (32);
c) Bewegen der Schneideeinrichtung (2) im wesentlichen parallel zur Grenzfläche zwischen dem relativ festen und relativ weichen Material (32,31) um die Materialien zu trennen;
d) Überwachen der auf die Schneideeinrichtung (2) ausgeübten Reaktionskraft (FR) in einer zur Bewegungsrichtung (A) senkrechten Richtung und
e) Anpassen der Bewegungsrichtung (A) der Schneideeinrichtung um die Reaktionskraft (FR) näherungsweise konstant zu halten.

2. Verfahren nach Anspruch 1, wobei die Schneideeinrichtung (2) eine Klinge (21) ist, und wobei die Orientierung der Klinge (21) angepaßt wird, um die Klinge (21) mit der Bewegungsrichtung (A) auszufluchten.

3. Verfahren nach einem der Ansprüche 1 oder 2, wobei die Reaktionskraft (FR) überwacht wird und mit Schwellwerten verglichen wird, und die Bewegungsrichtung (A) der Schneideeinrichtung (2) derart angepaßt wird, daß die Reaktionskraft (FR) zwischen den Schwellwerten bleibt.

4. Verfahren nach Anspruch 3, wobei der Betrag der Anpassung der Bewegungsrichtung (A) als Funktion der Reaktionskraft (FR) und der auf die Schneideeinrichtung in Bewegungsrichtung (A) ausgeübten Kraft (FC) bestimmt wird.

5. Verfahren nach einem der vorhergehenden Ansprüche, wobei der Schritt a) um folgendes ergänzt wird:
(i) Festlegen eines vorgegebenen Schneidestartpunktes auf oder in der Nähe einer angenommenen Position einer Grenzfläche zwischen dem weichen und dem starken Material (32,31);
(ii) Bewegen der Schneideeinrichtung (12) durch das weiche Material (31) entlang einer ersten durch den Schneidestartpunkt verlaufenden Schneidelinie;
(iii) Überwachen einer auf die Schneideeinrichtung ausgeübten, entgegen der Bewegungsrichtung der Schneideeinrichtung durch das schwache Material (31) gerichteten Kraft (FC);
(iv) Beenden der Bewegung entlang der ersten Schneidelinie wenn die Gegenkraft (FC) einen Vergleichswert überschreitet;

6. Verfahren nach Anspruch 5, wobei die Richtung der nachfolgenden Anfangsverschiebung der Schneideeinrichtung (2) im Schritt C bestimmt wird durch wiederholtes Zurückziehen der Klinge um einen vorgegebenen Weg und Vorwärtsbewegen der Klinge um einen geringfügig größeren Weg in einer zur vorherigen Bewegungsrichtung geneigten Richtung, wobei am Ende einer Vorwärtsbewegung die Gegenkraft (FC) unterhalb des Vergleichswertes liegt.

7. Vorrichtung zum Trennen eines strukturell relativ weichen Materials (31) von einem strukturell relativ festen Material (32) wobei die Vorrichtung eine Schneideeinrichtung (2) umfaßt, **dadurch gekennzeichnet, daß** die Schneideeinrichtung mit einem Kraftwandler (24) zum Messen einer auf die Schneideeinrichtung (2) ausgeübten Kraft versehen ist und daß die Vorrichtung überdies eine steuereinheit (10) zum Empfangen von Signalen vom Kraftwandler (24) und zum Steuern der Bewegung der Schneideeinrichtung (2) aufweist, so daß die Vorrichtung gemäß einem in einem der vorhergehenden Ansprüche beanspruchten Verfahren arbeitet.

8. Vorrichtung nach Anspruch 7, wobei die Steuereinheit (10) einen elektronischen Speicher (8) umfaßt, der gespeicherte Daten über vorher geschnittene Werkstücke beinhaltet, wobei die Schneideeinrichtung (2) aufgrund der gespeicherten Daten gesteuert wird.

## Revendications

1. Un procédé pour séparer une matière de structure relativement faible (31) d'une matière de structure relativement robuste (32) en utilisant un organe de coupe (2), caractérisé en ce que l'organe de coupe (2) est commandé par un robot (1), le procédé comprenant le fait de :
a) positionner l'organe de coupe (2) à l'intérieur de la matière relativement faible (31) près de la matière relativement robuste (32) ;
b) appliquer une force sur l'organe de coupe (2) en direction de la matière relativement robuste (32) ;
c) déplacer l'organe de coupe (2) de manière sensiblement parallèle à l'interface entre les matières relativement robuste et faible (32, 31) afin de séparer les matières ;
d) contrôler la force de réaction (F_{R}) appliquée à l'organe de coupe (2) dans une direction perpendiculaire à la direction de déplacement (A) ; et
e) régler la direction de déplacement (A) de l'organe de coupe (2) de manière à maintenir sensiblement constante la force de réaction (F_{R}).

2. Un procédé comme revendiqué à la revendication 1, dans lequel l'organe de coupe (2) est une lame (21), et dans lequel l'orientation de la lame (21) est réglée de manière à aligner la lame (21) avec la direction de déplacement (A).

3. Un procédé comme revendiqué à la revendication 1 ou 2, dans lequel la force de réaction (F_{R}) est contrôlée et est comparée avec des valeurs de seuil, et la direction de déplacement (A) de l'organe de coupe (2) est réglée de telle manière que la force de réaction (F_{R}) demeure entre les valeurs de seuil.

4. Un procédé comme revendiqué à la revendication 3, dans lequel la grandeur du réglage de la direction de déplacement (A) est déterminée en fonction de la force de réaction (F_{R}) et de la force (F_{C}) appliquées à l'organe de coupe dans la direction de déplacement (A).

5. Un procédé comme revendiqué dans une revendication précédente quelconque, dans lequel l'opération a) est effectuée en :
(i) définissant un point de départ présumé de la découpe sur ou près d'une position présumée d'une interface entre les matières robuste et faible (32, 31) ;
(ii) déplaçant l'organe de coupe (2) à travers la matière faible (31) le long d'une première ligne de découpe passant par le point de début de découpe ;
(iii) contrôlant une force (F_{C}) exercée sur l'organe de coupe en s opposant au déplacement de l'organe de coupe à travers la matière faible (31) ;
(iv) terminant le déplacement le long de la première ligne de découpe lorsque la force opposée (F_{C}) dépasse une valeur de référence.

6. Un procédé comme revendiqué à la revendication 5, dans lequel la direction du déplacement initial ultérieur de l'organe de coupe (2) dans l'opération c) est déterminée en retirant de manière répétée la lame sur une distance prédéterminée et en la faisant avancer sur une distance légèrement plus longue dans une direction inclinée par rapport à la direction d'avance antérieure jusqu'à ce que à la fin d'une avance la force opposée (F_{C}) soit en dessous de la valeur de référence.

7. Un appareil pour séparer une matière de structure relativement faible (31) d'une matière de structure relativement robuste (32), l'appareil comprenant un organe de coupe (2), caractérisé en ce que l'organe de coupe est muni d'un transducteur de force (24) pour mesurer une force exercée sur l'organe de coupe (2), et en ce que l'appareil comprend en outre une unité de commande (10) pour recevoir des signaux provenant du transducteur de force (24) et commander le mouvement de l'organe de coupe (2) de telle manière que l'appareil fonctionne en accord avec un procédé comme revendiqué dans une revendication précédente quelconque.

8. Un appareil comme revendiqué à la revendication 7, dans lequel l'unité de commande (10) comprend une mémoire électronique (8) contenant des données stockées relatives à des pièces d'ouvrage précédemment coupées, l'organe de coupe (2) étant commandé sur la base des données stockées.
